(19) Europäisches Patentamt
European Patent Office
Office européen des brevets

(11) Veröffentlichungsnummer: **0 133 155**
**A2**

(12) # EUROPÄISCHE PATENTANMELDUNG

(21) Anmeldenummer: **84810304.0**

(22) Anmeldetag: **21.06.84**

(51) Int. Cl.[4]: **A 01 N 37/36**
A 01 N 37/28, C 07 C 83/10
C 07 C 103/167, C 07 C 103/34

(30) Priorität: **27.06.83 CH 3497/83**

(43) Veröffentlichungstag der Anmeldung:
**13.02.85 Patentblatt 85/7**

(84) Benannte Vertragsstaaten:
**AT BE CH DE FR GB IT LI NL**

(71) Anmelder: **CIBA-GEIGY AG**
**Postfach**
**CH-4002 Basel(CH)**

(72) Erfinder: **Thummel, Rudolph C.**
**Route d'Alle 424**
**CH-2892 Gourgenay(CH)**

(72) Erfinder: **Fischer, Hanspeter, Dr.**
**Burggartenstrasse 14**
**CH-4103 Bottmingen(CH)**

(54) **Mittel und Verfahren zur Steigerung des Ernteertrages.**

(57) Es werden pflanzenwuchsregulierende, insbesondere ertragssteigernde und gametozide Mittel beschrieben, die als Aktivsubstanz ein Benzoyl-aminooxyessigsäurederivat der Formel I

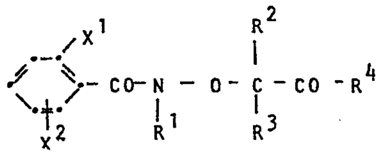

(I)

oder ein Salz davon enthält, worin

$X^1$ für Halogen

$X^2$ für Halogen, Nitro, Amino, Azido oder -NH-CO-$R^5$, $R^1$, $R^2$ und $R^3$ unabhängig vonainander für Wasserstoff oder $C_1$-$C_4$-Alkyl und

$R^4$ für Amino, -NH-$C_1$-$C_4$-Alkyl, -N-di-$C_1$-$C_4$-Alkyl oder -Y-$R^6$ stehen, wobei

$R^5$ $C_1$-$C_4$-Alkyl oder $C_1$-$C_4$-Halogenalkyl,

$R^6$ Wasserstoff, ein Metalkation, ein Hydraziniumkation, ein Ammoniumkation oder einen gegebenenfalls durch Halogen, Phenyl oder $C_1$-$C_4$-Alkoxy substituierten Rest aus der Gruppe Phenyl, $C_1$-$C_4$-Alkyl, $C_3$-$C_6$-Alkenyl oder $C_3$-$C_6$-Alkinyl und

Y Sauerstoff oder Schwefel stehen.

Es wird ferner die Verwendung der Mittel und der zugundeliegenden Substanzen zur Stimulierung des generativen Pflanzenwachstums und zur Gewinnung von Hybrid-Samen beschrieben, sowie ein Verfahren zur Herstellung agrochemischer Mittel, die Verbindungen der Formel I als Wirkstoffe enthalten.

EP 0 133 155 A2

Croydon Printing Company Ltd.

CIBA-GEIGY AG
Basel (Schweiz)

5-14481/=

## Mittel und Verfahren zur Steigerung des Ernteertrages

Die vorliegende Erfindung betrifft pflanzenwuchsregulierende, insbesondere ertragssteigernde und gametozide Mittel, die als Wirkstoff ein Benzoylaminooxyessigsäurederivat enthalten. Sie betrifft auch die Verwendung dieser Mittel und der in ihnen enthaltenen Wirkstoffe zur Regulierung des generativen Pflanzenwachstums sowie die Verwendung zur Erzeugung männlich steriler Pflanzen als Voraussetzung für die Erzeugung von Hybridsaatgut. Ferner betrifft die Erfindung auch die neuen Benzoylaminooxyessigsäurederivate und deren Herstellungsverfahren.

Als Wirkstoff der erfindungsgemässen pflanzenwuchsregulierenden Mittel im Rahmen der vorliegenden Erfindung sind die Benzoylaminooxyessigsäurederivate der Formel I

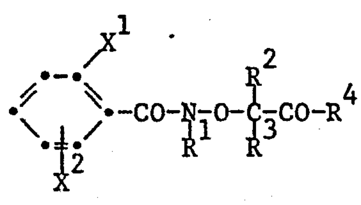

(I)

oder deren Salze zu verstehen, worin
$X^1$ für Halogen,
$X^2$ für Halogen, Nitro, Amino, Azido oder $-NH-CO-R^5$,
$R^1$, $R^2$ und $R^3$ unabhängig voneinander für Wasserstoff oder $C_1$-$C_4$-Alkyl, und
$R^4$ für Amino, $-NH-C_1-C_4$-Alkyl, $-N$-di-$C_1-C_4$-Alkyl oder $-Y-R^6$ stehen, wobei

$R^5$ $C_1$-$C_4$-Alkyl oder $C_1$-$C_4$-Halogenalkyl,
$R^6$ Wasserstoff, ein Metallkation, ein Hydraziniumkation, ein Ammoniumkation oder einen gegebenenfalls durch Halogen, Phenyl oder $C_1$-$C_4$-Alkoxy substituierten Rest aus der Gruppe Phenyl, $C_1$-$C_4$-Alkyl, $C_3$-$C_5$-Alkenyl oder $C_3$-$C_5$-Alkinyl und
Y Sauerstoff oder Schwefel stehen.

Unter dem Begriff Alkyl selbst oder Alkyl als Bestandteil eines anderen Substituenten sind je nach Zahl der angegebenen Kohlenstoffatome beispielsweise folgende Gruppen zu verstehen: Methyl, Aethyl, n-Propyl, i-Propyl, n-Butyl, i-Butyl oder tert.-Butyl. Alkenyl steht z.B. für Vinyl, 1-Propenyl, Allyl, 1-Butenyl, 2-Butenyl, 3-Butenyl usw. sowie Ketten mit mehreren Doppelbindungen. Bevorzugt ist Allyl. Alkinyl bedeutet z.B. 1-Propinyl, Propargyl, 1-Butinyl, 2-Butinyl usw.. Bevorzugt ist Propargyl. Halogenalkyl steht für einen ein- bis perhalogenierten Alkylsubstituenten , wie z.B. $CHCl_2$, $CH_2Cl$, $CCl_3$, $CF_3$, $CH_2CF_3$, $CH_2CH_2Cl$, usw. Unter Halogen soll hier und im folgenden Fluor, Chlor, Brom oder Jod, vorzugsweise Fluor, Chlor oder Brom verstanden werden. Halogenalkenyl und Halogenalkinyl stehen jeweils für eine ein- oder mehrfach durch Halogen substituierte Alkenyl- bzw. Alkinylgruppe, wobei als Halogen Chlor und Brom, insbesondere Chlor bevorzugt sind.

Unter einem Kation ist beispielsweise das anorganische Kation eines Elements der ersten bis vierten Hauptgruppe des Periodensystems zu verstehen. Typische Vertreter sind die Alkalimetalle wie Lithium, Natrium, Kalium oder die Erdalkalimetalle wie Magnesium, Calcium, Barium oder Elemente wie Aluminium oder Zinn. Darunter ist ferner das Kation eines Elements der ersten bis achten Nebengruppe zu verstehen, wie z.B. von Mangan, Eisen, Nickel, Kupfer, Zink oder Silber. Bevorzugt sind Alkali- und Erdalkalikationen sowie die Kationen der Elemente aus der dritten und vierten Periode des Periodensystems. Die Bezeichnung Kation steht auch für organische

Kationen wie Ammoniumionen oder für Hydraziniumionen. Als Ammoniumionen kommen z.B. in Frage: $NH_4$, $NH(Alkyl)_3$, $NH_2(Alkyl)_2$ und $NH_3(Alkyl)$ wie $NH(CH_3)_3$, $NH(C_2H_5)_3$, $NH_2(CH_3)_2$, $NH_2(C_3H_7-n)_2$, $NH_3CH_3$, $NH_3C_4H_9-n$ oder quaternäre Ammoniumionen wie Tetraäthyl-, Tetrapropyl-, Tetrabutyl-, Tetrapentyl-, Tetrahexyl-, Tetraheptyl-, Tetraoctyl-, Tetranonyl-, Tetradecyl-, Methyltributyl-, Dimethyldibutyl-, Trimethylbutyl-, Methyltrioctyl-, Benzyltrimethyl-, Benzyltriäthyl-, Benzyltripropyl-, Benzyltributyl-, Benzyldimethylhexadecyl-, Benzyldiäthylhexadecyl-, Diisobutyl-Kresoxyäthyldimethylbenzyl-, Trimethylphenyl-, Diphenyldimethyl-, Butyltripropyl-, Tributylphenyl- oder Tricaprylmethylammonium. Als Hydraziniumionen kommen unsubstituierte und substituierte Hydraziniumverbindungen in Frage wie $NH_2NH_3^+$, $NH_2N(Alkyl)_3^+$, $NH_2NH(Alkyl)_2^+$, $NH_2NH_2(Alkyl)^+$ usw.

Unter den Ammoniumkationen sind neben dem $NH_4^+$ insbesondere solche des Typs $NH_{(4-a)}(Niederalkyl)_a^+$ mit a = 1, 2, 3, 4 bevorzugt und unter diesen vor allem Tetraalkylammoniumionen, wie $N(CH_3)_4^+$, $N(C_2H_5)_4^+$, $N(C_4H_{9-n})_4^+$, $N(CH_3)_2(C_2H_5)_2^+$, $N(C_3H_7-n)_4^+$, $N(C_3H_7-i)_4^+$, usw.

Neben den freien Säuren der Wirkstoffe fallen unter die Formel I auch die schon erwähnten Salze, die Amide, die Ester und Thioester. Beispiele für die den Estern oder Thioestern zugrundeliegenden Alkohole sind: Methanol, Aethanol, n-Propanol, i-Propanol, n-Butanol, Phenol, Anisol, 4-Chlorphenol, 2,4-Dichlorphenol, 3,4-Dichlorphenol, 2,6-Dichlorphenol, 3,4-Dimethoxyphenol, Aethylenglykolmonomethyläther, Benzylalkohol, 2,3-Dichlorallylalkohol, Methoxymethanol, Aethoxymethanol, Aethylenglykolmonoäthyläther, 2,2,2-Trifluoräthanol, 2-Chloräthanol, Allylalkohol, Propargylalkohol, Zimtalkohol oder Methallylalkohol sowie die Mercaptoanalogen dieser Alkohole.

Die Verbindungen der Formel I sind bei Raumtemperatur stabile Oele, Harze oder überwiegend Feststoffe, die sich durch sehr wertvolle pflanzenwachstumsregulierende, insbesondere ertragssteigende und

gametozide Eigenschaften auszeichnen. Sie lassen sich daher bevorzugt auf dem Agrarsektor oder verwandten Gebieten zur gezielten Beeinflussung von Kulturpflanzen einsetzen.

Eine bevorzugte Untergruppe von Wirkstoffen der Formel I bilden die 2,6-Dihalogenbenzoylaminooxyessigsäurederivate der Unterformel Ia

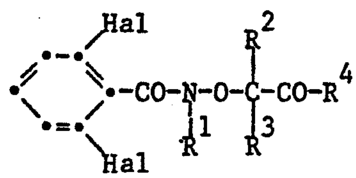

(Ia)

und deren Salze, worin die Substituenten Hal unabhängig voneinander für Halogen stehen und $R^1$, $R^2$, $R^3$ und $R^4$ die unter Formel I in Anspruch 1 gegebene Bedeutung haben.

Hiervon ist eine weitere enge Untergruppe von Wirkstoffen hervorzuheben, die sich dadurch auszeichnen, dass die beiden Substituenten Hal für Chlor stehen.

Ganz besonders bevorzugt sind wegen ihrer pflanzenwuchsregulatorischen Wirkung hierunter solche Wirkstoffe, in denen $R^1$, $R^2$ und $R^3$ Wasserstoff bedeuten und $R^4$ für Hydroxyl oder $C_1$-$C_4$-Alkoxy, vorzugsweise Methoxy oder Aethoxy steht.

Bevorzugte Einzelwirkstoffe sind 2,6-Dichlorbenzoylaminooxyessigsäure und deren Methylester.

Die 2,6-Dihalogenbenzoylaminooxyessigsäurederivate der Unterformel Ia sowie der weiter genannten engeren Untergruppen und Einzelwirkstoffe sind neu und bilden einen Gegenstand der vorliegenden Erfindung.

Einige Wirkstoffe der Formel I sind aus dem US-Patent 3,457,063 als Herbizide bekannt.

Die Wirkstoffe der Formel I können nach verschiedenen Methoden hergestellt werden. So erhält man die Verbindungen der Formel I beispielsweise, indem man eine Benzoylhydroxamsäure der Formel II

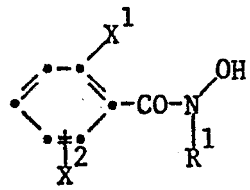

(II)

worin $X^1$, $X^2$ und $R^1$ die unter Formel I gegebene Bedeutung haben, in Gegenwart eines säurebindenden Mittels mit einem α-Halogenessigsäurederivat der Formel III

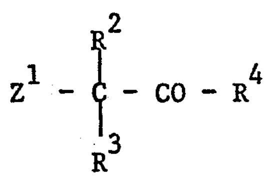

(III)

worin $R^2$, $R^3$ und $R^4$ die unter Formel I gegebene Bedeutung haben und $Z^1$ für Halogen, insbesondere für Chlor oder Brom steht, unter Halogenwasserstoffabspaltung umsetzt.

Die Reaktion wird zweckmässigerweise in einem reaktionsinerten Lösungsmittel bei Normaldruck durchgeführt. Als Lösungsmittel eignen sich beispielsweise Alkanole, Aether und ätherartige Verbindungen wie Diäthyläther, Diisopropyläther, t-Butylmethyläther, Dimethoxyäthan, Dioxan, Tetrahydrofuran, Anisol; Ketone wie Aceton, Methyläthylketon; Ester wie Aethylacetat, Butylacetat und Gemische solcher Lösungsmittel untereinander. Auch Gemische mit anderen reaktionsinerten Lösungsmitteln, z.B. mit aromatischen oder aliphatischen Kohlenwasserstoffen können verwendet werden.

Als säurebindende Mittel sind insbesondere tertiäre Amine wie Trimethylamin, Triäthylamin, Chinuclidin, 1,4-Diazabicyclo-(2,2,2)-octan,

1,5-Diazabicyclo(4,3,0)non-5-en oder 1,5-Diazabicyclo(5,4,0)undec-7-en geeignet. Es können aber auch anorganische Basen wie Hydride wie Natrium- oder Calciumhydrid, Hydroxide wie Natrium- und Kaliumhydroxid, Carbonate wie Natrium- und Kaliumcarbonat oder Hydrogencarbonate wie Kalium- und Natriumhydrogencarbonat verwendet werden.

Zur Beschleunigung der Reaktionsgeschwindigkeit führt man die Reaktion vorteilhafterweise bei erhöhter Temperatur, im allgemeinen zwischen 0° bis 120°C, üblicherweise am Siedepunkt des Lösungsmittels oder Lösungsmittelgemisches durch.

Die Ausgangsverbindungen der Formeln II und III sind allgemein bekannt und können nach an sich bekannten Methoden hergestellt werden.

Weiterhin kann man die Benzoylaminooxyessigsäurederivate der Formel I, in denen $R^4$ für $-OR^6$ steht, herstellen, indem man ein Aminooxyessigsäurederivat der Formel IV oder V

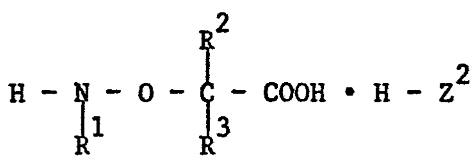

(IV)

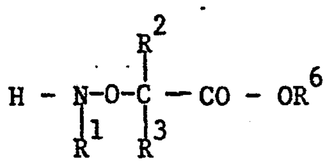

(V)

worin $R^1$, $R^2$, $R^3$ und $R^6$ die unter Formel I gegebene Bedeutung haben und $Z^2$ für Chlor oder Brom steht, in Gegenwart eines säurebindenden Mittels mit einem Benzoylhalogenid der Formel VI

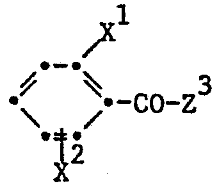

(VI)

umsetzt, worin $X^1$ und $X^2$ die unter Formel I gegebene Bedeutung haben und $Z^3$ für Chlor oder Brom steht.

Als säurebindende Mittel eignen sich beispielsweise Alkali- und Erdalkalihydroxide, -carbonate, -bicarbonate oder -oxide wie, Natriumhydroxid, Kaliumhydroxid, Natriumcarbonat, Kaliumcarbonat, Calciumcarbonat, Natriumhydrogencarbonat, Magnesiumoxid oder Calciumoxid oder organische Basen wie z.B. Trimethylamin, Diäthylamin, Triäthylamin, Piperidin, Pyrrolidin, Pyridin, Chinolin oder Chinuclidin.

Schliesslich kann man die Verbindungen der Formel I, in denen $R^4$ für eine Ester oder Thioestergruppe steht, auch herstellen, indem man ein Aminooxyessigsäurederivat der Formel VII

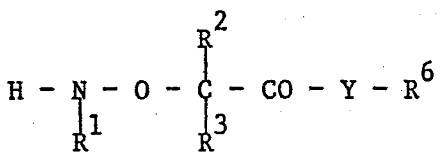

(VII)

worin $R^1$, $R^2$, $R^3$, $R^6$ und Y die unter Formel I gegebene Bedeutung haben, in Gegenwart eines Kondensationsmittels, wie beispielsweise Dicyclohexylcarbodiimid, mit einer Benzoesäure der Formel (VIII)

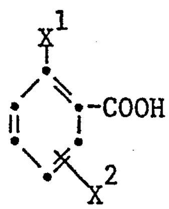

(VIII)

worin $X^1$ und $X^2$ die unter Formel I gegebene Bedeutung haben, umsetzt.

Die erhaltenen Säuren, Ester, Thioester oder Amide können durch allgemein bekannte Methoden wie Hydrolyse, Umesterung, Umamidierung, Veresterung, Amidierung oder durch Kombinationen dieser Verfahrensschritte ineinander überführt werden.

Die Ammonium- und Hydraziniumsalze der Formel I sind durch Reaktion einer freien Säure I mit dem entsprechenden Amin bzw. Hydrazin

zugänglich. Metallsalze der Formel I erhält man z.B. durch Reaktion der freien Säure I mit einem entsprechenden basischen Metallsalz z.B. einem Hydroxid, Carbonat, Alkoholat usw.

Die Ausgangsprodukte der Formeln II, III, IV, VI und VIII sind bekannt oder nach an sich bekannten Verfahren erhältlich.

Die Zwischenprodukte der Formeln V und VII sind neu. Sie wurden speziell für die Synthese der Wirkstoffe der Formel I entwickelt. Ihre Herstellung erfolgt in Anlehnung an ein von H.S. Anker und H.T. Clarke in Org. Synthesis, Coll. Vol. 3, p. 172, beschriebenes Verfahren.

Nach den genannten Herstellungsverfahren sind auch die neuen 2,6-Dihalogenbenzoylaminooxyessigsäurederivate der Formel Ia herstellbar. Ihre Herstellung erfolgt dabei nach den genannten Verfahren unter Verwendung der Benzoesäurederivate der Formeln IIa, VIa oder VIIIa

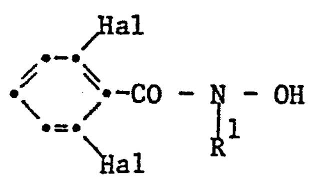 (IIa)

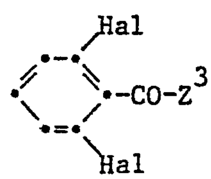 (VIa)

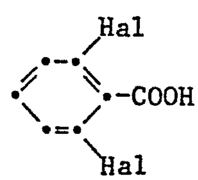 (VIIIa)

worin die Substituenten Hal jeweils unabhängig voneinander Halogenatome bedeuten, $R^1$ die unter Formel I gegebene Bedeutung hat und $Z^3$ für Chlor oder Brom steht. Diese Herstellungsverfahren bilden einen Teil der vorliegenden Erfindung.

Es wurde nun überraschend gefunden, dass die Wirkstoffe der Formel I bzw. Mittel, die diese Wirkstoffe enthalten, sich vor allem dadurch auszeichnen, dass sie gezielt in den Metabolismus der Pflanzen eingreifen. Dieser gezielte Eingriff in die physiologischen Vorgänge der Pflanzenentwicklung macht die Wirkstoffe der Formel I für verschiedene Zwecke verwendbar, insbesondere für solche, die mit der Ertragssteigerung bei Nutzpflanzen, der Ernteerleichterung und der Arbeitseinsparung bei Massnahmen an Pflanzenkulturen im Zusammenhang stehen.

Nach bisherigen Erfahrungen gilt für die Applikation von Wachstumsregulatoren, dass die Aktivsubstanzen eine oder mehrere unterschiedliche Wirkungen bei den Pflanzen hervorrufen können. Diese verschiedenartigen Wirkungen hängen im wesentlichen vom Zeitpunkt der Anwendung, d.h. vom physiologischen Zustand des Samens oder vom Entwicklungszustand der Pflanze, der Art der Applikation sowie insbesondere von den angewendeten Konzentrationen ab. Derartige Effekte sind wiederum je nach Pflanzenart verschieden. Die Applikation von Verbindungen der Formel I eröffnet nunmehr die Möglichkeit das Wachstum von Pflanzen in gewünschter Weise zu beeinflussen.

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn dadurch kann z.B. die Häufigkeit der Grasschnitte in Ziergärten, Park- und Sportanlagen oder an Strassenrändern reduziert werden. Von Bedeutung ist auch die Hemmung des Wuchses von krautigen und holzigen Pflanzen an Strassenrändern und in der Nähe von Ueberlandleitungen oder ganz allgemein in Bereichen, in denen ein starker Bewuchs unerwünscht ist.

Wichtig ist auch die Anwendung von Wachstumsregulatoren zur Hemmung des Längenwachstums bei Getreide, denn durch eine Halmverkürzung wird die Gefahr des Umknickens ("Lagerns") der Pflanzen vor der Ernte

verringert oder vollkommen beseitigt. Ausserdem können Wachstumsregulatoren bei Getreide eine Halmverstärkung hervorrufen, die ebenfalls dem Lagern entgegenwirkt.

Eine Hemmung des vegetativen Wachstums erlaubt bei vielen Kulturpflanzen eine dichtere Anpflanzung der Kultur, so dass ein Mehrertrag, bezogen auf die Bodenfläche, erzielt werden kann.

Ein weiterer Mechanismus der Ertragssteigerung mit Wachstumshemmern beruht darauf, dass die Nährstoffe in stärkerem Masse der Blüten- und Fruchtbildung zugute kommen, während das vegetative Wachstum eingeschränkt wird.

Mit Wachstumsregulatoren lässt sich häufig aber auch eine Förderung des vegetativen Wachstums erzielen. Dies ist von grossem Nutzen, wenn die vegetativen Pflanzenteile geerntet werden. Eine Förderung des vegetativen Wachstums kann aber auch gleichzeitig zu einer Förderung des generativen Wachstums führen, so dass z.B. mehr oder grössere Früchte zur Ausbildung kommen.

Ertragssteigerungen können in manchen Fällen auch durch einen Eingriff in den pflanzlichen Stoffwechsel erreicht werden, ohne dass sich Aenderungen des vegetativen Wachstums bemerkbar machen. Wachstumsregulatoren können ferner eine Veränderung der Zusammensetzung der Pflanzen bewirken, so dass eine bessere Qualität der Ernteprodukte herbeigeführt wird. So ist es beispielsweise möglich, den Gehalt an Zucker in Zuckerrüben, Zuckerrohr, Ananas sowie Zitrusfrüchten zu erhöhen oder den Proteingehalt in Soja oder Getreide zu steigern.

Unter dem Einfluss von Wachstumsregulatoren kann es zur Ausbildung parthenokarper Früchte kommen. Ferner kann das Geschlecht der Blüten beeinflusst werden.

Mit Wachstumsregulatoren lässt sich auch die Produktion oder der Abfluss von sekundären Pflanzenstoffen positiv beeinflussen. Als Beispiel sei die Stimulierung des Latexflusses bei Gummibäumen genannt.

Während des Wachstums der Pflanze kann durch Einsatz von Wachstumsregulatoren auch die seitliche Verzweigung durch eine chemische Brechung der Apikaldominanz vermehrt werden.Daran besteht z.B. Interesse bei der Stecklingsvermehrung von Pflanzen. Es ist jedoch auch möglich, das Wachstum der Seitentriebe zu hemmen, z.B. um bei Tabakpflanzen nach der Dekapitierung die Ausbildung von Seitentrieben zu verhindern und damit das Blattwachstum zu fördern.

Unter dem Einfluss von Wachstumsregulatoren kann der Blattbestand von Pflanzen so gesteuert werden, dass ein Entblättern der Pflanzen zu einem gewünschten Zeitpunkt erreicht wird. Eine derartige Entlaubung ist von Interesse, um eine mechanische Beerntung z.B. bei Wein oder Baumwolle, zu erleichtern oder um die Transpiration zu einem Zeitpunkt herabzusetzen, an dem die Pflanze verpflanzt werden soll. Durch Einsatz von Wachstumsregulatoren lässt sich der vorzeitige Fruchtfall verhindern. Es ist jedoch auch möglich, den Fruchtfall, - zum Beispiel bei Obst -, im Sinne einer chemischen Ausdünnung bis zu einem bestimmten Ausmass zu fördern. Wachstumsregulatoren können auch dazu dienen, um bei Kulturpflanzen zum Zeitpunkt der Ernte die zum Ablösen der Früchte erforderliche Kraft zu vermindern, so dass eine mechanische Beerntung der Pflanzen ermöglicht, beziehungsweise eine manuelle Beerntung erleichtert wird.

Mit Wachstumsregulatoren lässt sich ferner eine Beschleunigung oder auch eine Verzögerung der Reife des Erntegutes vor oder nach der Ernte erreichen. Dieses ist von besonderem Vorteil, weil sich dadurch eine optimale Anpassung an die Bedürfnisse des Marktes herbeiführen

lässt. Weiterhin können Wachstumsregulatoren in manchen Fällen die Fruchtausfärbung verbessern. Darüberhinaus kann mit Hilfe von Wachstumsregulatoren auch eine zeitliche Konzentrierung der Reife erzielt werden. Damit werden Voraussetzungen dafür geschaffen, dass z.B. bei Tabak, Tomaten oder Kaffee, eine vollständige mechanische oder manuelle Beerntung in nur einem Arbeitsgang vorgenommen werden kann.

Durch die Anwendung von Wachstumsregulatoren kann auch die Samen- oder Knospenruhe der Pflanzen, also die endogene Jahresrhythmik, beeinflusst werden, so dass die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen.

Mit Wachstumsregulatoren kann auch erreicht werden, dass der Austrieb von Knospen oder die Keimung von Samen verzögert wird, z.B. um in frostgefährdeten Gebieten eine Schädigung durch Spätfröste zu vermeiden. Andererseits gelingt es, das Wurzelwachstum und/oder die Ausbildung von Sprösslingen zu stimulieren, so dass das Wachstum auf eine kürzere Zeitdauer beschränkt werden kann. Ferner kann ein grösseres besser ausgebildetes Wurzelwerk eine verbesserte Stressüberwindung (Trockenheit) bewirken, die Aufnahme von Nährstoffen verbessern und so zur Ertragssteigerung führen.

Wachstumsregulatoren können auch eine Halophilie bei den Kulturpflanzen erzeugen. Damit werden die Voraussetzungen dafür geschaffen, dass eine Kultivierung von Pflanzen auf salzhaltigen Böden durchgeführt werden kann.

Mit Wachstumsregulatoren kann auch eine Frost- und Trockenresistenz bei Pflanzen induziert werden.

Unter dem Einfluss von Wachstumsregulatoren kann das Altern (die Seneszenz) von Pflanzen oder Pflanzenteilen gehemmt respektive verzögert werden. Eine solche Wirkung kann von hohem wirtschaftlichem Interesse sein, dadurch, dass bei behandelten Pflanzenteilen oder ganzen Pflanzen wie Obst, Beeren, Gemüse, Salat oder Zierpflanzen deren Lagerfähigkeit nach der Ernte verbessert oder verlängert werden kann. Ebenso kann durch Behandlung von Kulturpflanzen über eine Verlängerung der Phase photosynthetischer Aktivität eine beachtliche Ertragssteigerung erzielt werden.

Ein weiteres wichtiges Anwendungsgebiet für Wuchshemmer ist deren Einsatz zur Hemmung eines übermässigen Wachstums bei tropischen Bodenbedeckungspflanzen, den sogenannten Cover crops. In tropischen und subtropischen Monokulturen, wie z.B. in Palmplantagen, Baumwoll-, Maisfeldern usw. werden neben den eigentlichen Kulturpflanzen oftmals Bodenbedeckungspflanzen, insbesondere Leguminosenarten angepflanzt, die zur Erhaltung oder Steigerung der Bodenqualität (Verhinderung der Austrocknung, Versorgung mit Stickstoff) und zur Verhinderung von Erosion (Abtragung durch Wind und Wasser) dienen. Durch Applikation der erfindungsgemässen Wirkstoffe kann nunmehr das Wachstum dieser cover crops kontrolliert und somit die Wuchshöhe dieser Bodenbedeckungspflanzen auf einem niedrigen Niveau gehalten werden, so dass ein gesundes Gedeihen der Kulturpflanzen und die Aufrechterhaltung einer günstigen Bodenbeschaffenheit gewährleistet ist.

Ferner wurde nunmehr überraschend gefunden, dass Benzoylaminooxyessigsäurederivate der Formel I bzw. Mittel, die diese Wirkstoffe enthalten, sich vor allem dadurch auszeichnen, dass sie beispielsweise zur insbesondere Arbeitseinsparung bei der Züchtung und Produktion von Hybridsaatgut verwendbar sind.

Mit den Benzoylaminooxyessigsäurederivaten der Formel I bzw. mit agrochemischen Mitteln, die diese Verbindungen als Wirkstoff enthalten, lässt sich das generative Wachstum einer ganzen Reihe mono- und dikotyler Pflanzen steuern, wobei das vegetative Wachstum in weiten Konzentrationsbereichen für die Kulturen positiv beeinflusst wird. Der Einfluss auf das generative Pflanzenwachstum macht sich, je nach Pflanzenkultur, unterschiedlich bemerkbar.

Eine im Vordergrund stehende Art der Steuerung des generativen Wachstums beruht auf der besonderen Eigenschaft der hierin beschriebenen Benzoylaminooxyessigsäurederivate, bei verschiedenartigen Kulturpflanzen, insbesondere bei der Anwendung in Monokotyledonen, wie Weizen, Roggen, Gerste, Hafer, Reis, Mais, Sorghum-Hirse, Futtergräser usw., aber auch bei anderen Pflanzen,wie bei Sonnenblumen oder Baumwolle eine gametozide Wirkung zu entfalten. Diese führt zu einer männlichen Sterilität der Pflanze, ohne die Fruchtbarkeit der weiblichen Blütenteile merklich zu beeinflussen. Bei zahlreichen Kulturpflanzen ist gleichzeitig eine Zunahme der Blütenansätze und/oder die Ausbildung parthenokarper Früchte (z.B. bei Tomaten) zu beobachten. Die männliche Sterilität zeigt sich entweder in einer aktuellen männlichen Sterilität, nämlich darin, dass die männlichen Blütenteile überhaupt nicht gebildet werden oder darin, dass die Blütenpollen steril sind, oder sie zeigt sich in einer funktionellen männlichen Sterilität, bei der die männlichen Blütenteile zwar noch gebildet werden, aber nicht in der Lage sind, eine Befruchtung herbeizuführen. Die Wirkstoffe der Formel I können daher auch Protogynie hervorrufen, d.h. es werden vorzeitig befruchtungsfähige weibliche Blütenteile ausgebildet oder das Heranwachsen der männlichen Blütenteile zeitlich so verzögert, dass eine Fremdbestäubung mit ausgewählten Blütenpollen durchgeführt werden kann.

Diese gametoziden Effekte lassen sich besonders vorteilhaft bei der Züchtung und Feldproduktion von Hybrid-Saatgut einsetzen. Hybrid-

Saatgut spielt bei den Hauptnahrungsnutzpflanzen und Zierpflanzen eine bedeutende Rolle. Hybride sind üblicherweise vitaler als reine Arten und liefern höhere Erträge, als die ertragsreichste Elternsorte.

Bei der Hybridisierung kreuzt der Züchter zwei oder mehr sorgfältig ausgewählte Inzuchtlinien in einem experimentell ermittelten Schema und erhält auf diese Weise Hybridsaatgut, dessen Pflanzen gesteigerte Wüchsigkeit und Leistung aufweisen.

Bei den einhäusigen synözischen Maispflanzen lässt sich eine Hybridisierung auch auf konventionelle Weise durchführen, da männliche und weibliche Blütenteile an unterschiedlichen Stellen der Pflanze ausgebildet werden (dikline Blüten). Die Antheren, die Pollen liefern, bilden die Spitze der Maispflanze, während die kolbenförmige, weibliche Infloreszenz mit den Narbenfäden unterhalb der Pflanzenmitte ausgebildet wird. Um nun $F_1$-Hybride zu züchten werden üblicherweise alternierende Reihen von Maispflanzen der Sorten oder homozygoten Linien AA und BB angepflanzt. Zur Sicherstellung, dass der AA-Mais keine Pollen bildet, werden die AA-Pflanzen rechtzeitig, vor der vollständigen Entwicklung der männlichen Blütenstände manuell oder maschinell entfahnt und anschliessend mit Pollen einer BB-Mais-Sorte bestäubt, wobei auf den AA-Pflanzen Saatgut eines AB-Hybrids ($F_1$) entsteht. Der hierzu erforderliche Arbeitsvorgang ist nicht nur zeitraubend und aufwendig, sondern führt zwangsläufig zu einer Verletzung der Pflanze und besonders bei maschineller Entmännlichung zu einer unerwünschten Ertragsdepression bei der als weibliche Elternteil (Samenträger) dienenden Linie/Sorte.

Bei einhäusigen, synözischen Pflanzen wie Mais lässt sich die Hybridisierung nach der geschilderten, herkömmlichen Methode noch einigermassen wirtschaftlich bewerkstelligen. Wesentlich schwieriger gestaltet sich dieser Vorgang jedoch bei kleinkörnigen Halmfrüchten,

insbesondere bei jenen, die Zwitterblüten aufweisen und sich normalerweise selbst bestäuben (sog. Selbstbefruchtung) oder auch kreuzbestäuben (sog. Fremdbefruchtung). In diesen Fällen erweist sich das herkömmliche Verfahren als äusserst zeitraubend, arbeitsintensiv, unwirtschaftlich, und es bedarf vor allem speziell ausgebildeter Arbeitskräfte. Kleinkörnige Halmfrucht-Hybride lassen sich nur züchten, wenn die Selbst- und Kreubestäubung in der Mutterlinie vollständig unterdrückt wird. In der Praxis muss man dazu jede der winzigen Blüten frühzeitig von Hand öffnen und alle Staubbeutel sorgfältig entfernen und anschliessend die Blüten gegen unerwünschte Fremdbestäubung schützen.

Bei einigen Getreidesorten wie Weizen, Gerste, Hirse sowie Mais und bei Dikotylen wird noch eine weitere Hybridisierungsmethode praktiziert. Bei diesem Verfahren geht man von cytoplasmatisch, männlich sterilen Pflanzen aus und führt Fremdbestäubung durch. Diese cytoplasmatisch sterilen Pflanzen beschränken sich auf Mutterlinien, die dasselbe Cytoplasma aufweisen. Dadurch werden cytoplasmatisch vererbte Schwächen oder Fehler, z.B. mangelnde Restistenz gegen einen bestimmten Krankheitserreger oder Frostempfindlichkeit und ähnliches, bei dieser Methode zwangsläufig auf alle, von dieser Mutterlinie abstammenden Hybride übertragen. Ausserdem erfordert die Hybridisierung mit cytoplasmatisch, männlich sterilen Linien, insbesondere bei kleinkörnigen Halmfrüchten, aber auch in dikotylen Kulturen, aufwendige Massnahmen von erhöhtem Schwierigkeitsgrad.

Unabhängig von der Methode, setzt die Züchtung von Hybrid-Saatgut stets die Erzeugung männlich steriler und weiblich intakter Pflanzen voraus. Eine einfach, praktikable und wirtschaftliche Lösung zur Herstellung einer selektiven männlichen Sterilität bietet der Einsatz von chemischen Sterilisierungsmitteln (Gametoziden). Benzoylaminooxyessigsäure-derivate der Formel I zeigen sehr gute männlich-gametozide

Eigenschaften und sind daher für diese und verwandte Zwecke geeignet. Ihr Einsatz in Kulturen von Nutzpflanzen lässt die meisten Probleme, die an herkömmliche Hybridisierungsmethoden gekoppelt sind, gar nicht erst in Erscheinung treten.

Zur Erzeugung von männlich sterilen Pflanzen und damit zur Gewinnung von Hybrid-Saatgut kann man im einzelnen folgendermassen vorgehen: Beide Elternpflanzen, die miteinander gekreuzt werden sollen, werden in z.B. alternierenden Reihen gepflanzt. Die als Samenträger oder Mutterpflanze ausgewählte Linie wird zu Beginn der Blütenbildung, aber noch vor Ausbildung der männlichen Blütenteile, mit einem der Wirkstoffe der Formel I behandelt. Auf diese Weise erhält man eine Reihe männlich steriler, aber fruchtbarer weiblicher Elternpflanzen. Die andere Reihe bleibt unbehandelt und dient als Pollenspender. Ihre männlichen Blütenteile gelangen zur vollen Ausbildung und liefern die Pollen zur Bestäubung der Mutterpflanze bzw. des Samenträgers. Die von der Mutterpflanze erzeugten Samenkörner stellen das Hybridsaatgut dar und können auf konventionelle Weise geerntet werden. Die Körner der männlichen Elternpflanzen werden separat geernetet und anderweitig genutzt.

Das beschriebene Verfahren zur Erzeugung von männlich sterilen Pflanzen bzw. zur Gewinnung von Hybridsaatgut ist Bestandteil der vorliegenden Erfindung.

Darüberhinaus bewirken die Wirkstoffe der Formel I noch weitere wachstumsregulierende Effekte, beispielsweise eine zeitliche Steuerung der Blütenbildung und in der Folge eine kontrollierte Samen- oder Fruchtreifung. Diese Art der Blütenstimulation ist insbesondere bei solchen Pflanzensorten von wirtschaftlichem Interesse, die gleichzeitig blühen und Früchte tragen. So könnte beispielsweise die Behandlung von Avocado- oder Baumwollpflanzen mit Verbindungen der Formel I einerseits zu einer vorteilhaften Zunahme der Zahl der

Blütenstände führen, andererseits der Blüh- und Reifprozess einem kontrollierten Rhythmus unterworfen werden. Auf diese Weise könnte nicht nur eine Ertragssteigerung erreicht werden, sondern eine rationellere Gestaltung der Ernte und somit eine günstigere Vermarktung.

Diese Art der Stimulation der Blütenbildung spielt auch bei der Obsterzeugung eine entscheidende Rolle. Im allgemeinen beobachtet man nämlich beim Obstanbau, genetisch oder durch Aussenfaktoren bedingt, meist einen jährlichen Wechsel zwischen Ertrags- und Ausfalljahren. Diese Alternanz ist die Folge eines Missverhältnisses zwischen dem Triebwachstum und der Blütenanlage, indem die Ernährung des Fruchtbehangs zuviele Assimilate auf Kosten der Bildung von Blütenknospen beansprucht. Die konventionellen Massnahmen zur Verbesserung der Obstqualität bestehen in einer zeitraubenden mechanischen Ausdünnung von ganz jungen Früchten sowie durch wachstumsregulierenden Schnitt der sogenannten wilden Triebe; dies führt jedoch zwangsläufig zu einer Verletzung der Bäume und zu geringen Erträgen. Durch den Einsatz von Benzoylaminooxyessigsäurederivaten der Formel I lässt sich das Triebwachstum weitgehend zugunsten des generativen Wachstums unterdrücken,so dass die Wuchskraft vermehrt zur Blüten- und Fruchtbildung beiträgt. Auf diese Weise kann nicht nur die Obstqualität, sondern auch der Ertrag verbessert und eine Phasenverschiebung in der Alternanz erzeugt werden.

In manchen Fällen bewirkt die Applikation von Verbindungen der Formel I eine deutliche Verlängerung der Blühperiode, dadurch kann die Möglichkeit der Bestäubung aller Blüten erhöht werden. Eine zeitliche Dehnung der Blühphase ist auch bei einer ganzen Anzahl von Zierpflanzen, insbesondere bei Blumen wünschenswert.

Bei einer ganzen Reihe unterschiedlicher Kulturpflanzen beobachtet man nach deren Behandlung mit Wirkstoffen der Formel I parallel zur männlichen Sterilisierung einen positiven Einfluss auf die weiblichen

Blütenstände. Auf diese Weise wird oftmals die Zahl der weiblichen Blüten pro Blütenstand oder pro Pflanze und somit auch der Ertrag erhöht. Derartige Effekte sind auch bei kleinkörnigen Halmfrüchten (wie Gerste), Gurkengewächsen, Sonnenblumen, Hülsenfrüchte (wie Soja), baumartigen Gewächsen und Zierpflanzen (wie Compositen) zu verzeichnen. In einigen Fällen treten weitere, verwandte wachstumsregulierende Wirkungen auf. Daneben kann bei gewissen Pflanzensorten auch eine verringerte Frostempfindlichkeit und eine erhöhte Resistenz gegenüber Krankheitserregern festgestellt werden.

Die vorliegende Erfindung betrifft somit auch die Verwendung von Benzoylaminooxyessigsäurederivaten der Formel I oder von Mitteln, die diese Verbindungen als Aktivsubstanzen enthalten, zur Steuerung des Pflanzenwuchses, isnbesondere zur Erzeugung einer Sterilität der männlichen Blütenteile (Einsatz als Gametozide) und/oder zur Förderung der weiblichen Blütenteile und aller daraus resultierender Sekundäreffekte, wie z.B. Ertragssteigerung, Verlängerung der Blühdauer, vermehrte Blütenbildung, Steuerung der Fruchtbildung oder des Reifeprozesses und ähnliches.

Darüberhinaus schliesst die vorliegende Erfindung auch die Herstellung agrochemischer Mittel ein, die gekennzeichnet ist durch das innige Vermischen der Aktivsubstanz mit einem oder mehreren hierin beschriebenen Substanzen bzw. Substanzgruppen. Eingeschlossen ist auch ein Verfahren zur Behandlung von Pflanzen, das sich durch Applikation der Verbindungen der Formel I bzw. der neuen Mittel auszeichnet.

Die Aufwandmengen richten sich nach dem gewünschten wachstumsregulierenden Effekt und sollten vorteilhafterweise, je nach Entwicklungsstadium und Pflanzengattung, d.h. je nach Applikationszeitpunkt, experimentell bestimmt werden.

Bei den verschiedenen Indikationsgebieten gelten folgende Faustregeln:

Zur Wuchsregulierung, insbesondere zur Erzielung einer gametoziden Wirkung, liegen die Aufwandmengen im allgemeinen pro Applikation zwischen 0,05 und 12, vorzugsweise 0,5 bis 8, insbesondere 1 bis 4 kg Aktivsubstanz pro ha. Als günstiger Applikationszeitpunkt, insbesondere bei Getreidekulturen, gilt die Periode nach dem Auflaufen, aber noch bevor sich Aehren und Antheren zeigen bzw. das 5 1/2 Blattstadium oder die beginnende Blütenbildung.

Soll die Zahl der Blütenstände vermehrt oder die Blühphase verlängert werden, z.B. bei Sonnenblumen, Baumwolle, Gurkengewächsen (wie Kürbis, Gurken, Melonen), Hülsenfrüchten (wie Bohnen, Linsen, Erbsen, Soja) oder Zierpflanzen, so liegen vorteilhafte Dosierungen bei 0,5 bis 4 kg AS/ha, wobei die Applikation notwendigerweise vor dem Blühbeginn, insbesondere vor Beginn der Knospenbildung erfolgt.

Bei Pflanzen wie z.B. der Bauwmolle, bei der Blüten und Früchte gleichzeitig auftreten ist Splitapplikation angezeigt, d.h. die Applikation wird bevorzugt mit kleineren Aufwandmengen periodisch wiederholt. Im allgemeinen hängen die Aufwandmengen auch von der Applikationsart ab und liegen bei der einfachen Blattapplikation bevorzugt zwischen 2 bis 6 kg AS/ha, bei der Splitapplikation zwischen 2 bis 4 kg AS/ha und bei der Boden-(Drench)-applikation bei 3 bis 12 kg AS/ha, je nach Bodentyp.

Die beschriebenen Aufwandmengen und Applikationsarten sind ein Teil der vorliegenden Erfindung.

Wirkstoffe der Formel I werden üblicherweise in Form von Zusammensetzungen verwendet und können gleichzeitig oder nacheinander mit weiteren Wirkstoffen auf die zu behandelnde Fläche oder Pflanze gegeben werden. Diese weiteren Wirkstoffe können sowohl Düngemittel,

Spurenelement-Vermittler oder auch selektive Herbizide, Insektizide, Fungizide, Bakterizide, Nematizide, Molluskizide oder Gemische mehrer dieser Präparate sein, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoffes der Formel I bzw. eines agrochemischen Mittels, das mindestens einen dieser Wirkstoffe enthält, ist das Aufbringen auf das Blattwerk (Blattapplikation). Wird dieses Verfahren rechtzeitig zu Beginn der Blüte durchgeführt, so kann auf diese Weise eine sehr selektive männliche Sterilität erzeugt werden. Die Wirkstoffe der Formel I können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt z.B. in Form von Granulat (Bodenapplikation). Darüberhinaus sind in besonderen Fällen weitere Applikationsarten möglich, so z.B. die gezielte Behandlung der Pflanzenstengel oder der Knospen.

Die Verbindungen der Formel I werden in unveränderter Form oder vorzugsweise als Mittel zusammen mit den in der Fromulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden). In den Fällen, in denen ein Salz der Formel I formuliert wird, kann auf dessen Isolierung verzichtet werden, da auch die wässrige Lösung eines Wirkstoffs der Formel I, das zuvor durch eine Base neturalisiert worden war, direkt mit weiteren Formulierungshilfsstoffen gemischt werden kann.

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl; oder Wasser. Der Zusatz von mineralischen Oelen oder von pflanzlichen Oelen ist besonders bei Formulierungen vorteilhaft, die bei der Blattapplikation eingesetzt werden.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse

Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorganulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch

den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes oder Phospholipide in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und

Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sie vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ridgewood, New Jersey, 1981;
H. Stache, "Tensid-Taschenbuch", 2. Aufl., C. Hanser Verlag, München, Wien, 1981;
M. and J. Ash. "Encyclopedia of Surfactants", Vol. I-III, Chemical Pulishing Co., New York, 1980-1981.
Die pestiziden Zubereitungen enthalten in der Regel 0,1 bis 95 %, insbesondere 0,1 bis 80 %, Wirkstoff der Formel I, 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

Emulgierbare Konzentrate

| | |
|---|---|
| Aktiver Wirkstoff: | 1 bis 20 %, bevorzugt 5 bis 10 % |
| oberflächenaktives Mittel: | 5 bis 30 %, vorzugsweise 10 bis 20 % |
| flüssiges Trägermittel: | 50 bis 94 %, vorzugsweise 70 bis 85 %. |

Stäube

| | |
|---|---|
| Aktiver Wirkstoff: | 0,1 bis 10 %, vorzugsweise 0,1 bis 1 % |
| festes Trägermittel: | 99,9 bis 90 %, vorzugsweise 99,9 bis 99%. |

Suspension-Konzentrate

| | |
|---|---|
| Aktiver Wirkstoff | 5 bis 75 %, vorzugsweise 10 bis 50 % |
| Wasser: | 94 bis 25 %, vorzugsweise 90 bis 30 % |
| oberflächenaktives Mittel: | 1 bis 40 %, vorzugsweise 2 bis 30 %. |

Benetzbare Pulver

| | |
|---|---|
| Aktiver Wirkstoff | 0,5 bis 90 %, vorzugsweise 1 bis 80 % |
| oberflächenaktives Mittel: | 0,5 bis 20 %, vorzugsweise 1 bis 15 % |
| festes Trägermittel: | 5 bis 95 %, vorzugsweise 15 bis 90%. |

Granulate

| | |
|---|---|
| Aktiver Wirkstoff: | 0,5 bis 30 %, vorzugsweise 3 bis 15 % |
| festes Trägermittel: | 99,5 bis 70 %, vorzugsweise 97 bis 85%. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden.

Herstellungsbeispiele:

Beispiel H1: Aminooxyessigsäuremethylester.

In eine Suspension von 200 g Aminooxyessigsäure-hydrochlorid in 900 ml Methanol wird bis zur Sättigung Chlorwasserstoffgas eingeleitet. Das Reaktionsgemisch wird bei einer Temperatur von 20 - 25° C für 24 Stunden gerührt. Aus der Reaktionslösung werden 700 ml Lösungsmittel abdestilliert. Der Rückstand wird mit Kaliumcarbonat neutralisiert. Diese Mischung wird mit Aether verdünnt und filtriert. Das Filtrat wird eingedampft und der ölige Rückstand im Vakuum fraktioniert. Man erhält 136 g (70 % d.Th.) Aminooxyessigsäuremethylester als gelbes Oel, Sdp. 80°C/20 mb.

Beispiel H2: 2,6-Dichlorbenzoylaminooxyessigsäuremethylester (Verb. Nr. 1.2).

Zu einer Lösung von 19,0 g Aminooxyessigsäuremethylester und 20,0 g Triäthylamin in 300 ml Aether lässt man bei einer Temperatur zwischen 0 und 10° C 38,0 g 2,6-Dichlorbenzoylchlorid zutropfen. Das Reaktionsgemisch wird bei einer Temperatur von 20 - 25° C für 12 Stunden gerührt und anschliessend filtriert. Das Filtrat wird mit Wasser gewaschen, getrocknet und eingedampft. Der kristalline Rückstand wird aus Aethylacetat umkristallisiert. Man erhält so 37,5 g (75 % d.Th.) 2,6-Dichlorbenzoylaminooxyessigsäuremethylester, Smp. 117 - 119° C.

Beispiel H3: 2,6-Dichlorbenzoylaminooxyessigsäuremethylester (Verb. Nr. 1.2).

Eine Lösung von 1,6 g Kaliumhydroxid in 20 ml Methanol wird mit 2,0 g N-Hydroxy-2,6-dichlorbenzamid und 1,7 g Bromessigsäuremethylester versetzt. Die Suspension wird für 2 Stunden bei 20 - 25° C gerührt und anschliessend eingedampft. Der ölige Rückstand wird mit Aethylacetat und Wasser aufgenommen. Durch Eindampfen der organischen Phase erhält man 1,1 g 2,6-Dichlorbenzoylaminooxyessigsäuremethylester (40 % d.Th.)

Beispiel H4: 2,6-Dichlorbenzoylaminooxyessigsäuremethylester (Verb. Nr. 1.2).

Eine Suspension von 10,0 g Natriumhydrid in 100 ml Tetrahydrofuran wird portionsweise mit 41,0 g N-Hydroxy-2,6-dichlorbenzamid versetzt. Nach Beendigung der Gasentwicklung lässt man zu diesem Gemisch bei einer Temperatur von 20 - 25° C 33 g Bromessigsäuremethylester zutropfen. Anschliessend wird die Reaktionsmischung für 2 Stunden zum Rückfluss erhitzt. Nach Abtrennen des entstandenen Niederschlags wird die Lösung mit Wasser gewaschen und eingedampft. Durch Umkristallisieren des Rückstandes aus Aethylacetat erhält man 30,0 g (54 % d.Th.) 2,6-Dichlorbenzoylaminooxyessigsäuremethylester.

Beispiel H5: N-Hydroxy-2,6-dichlorbenzamid.

In einer vorgelegten Mischung aus 300 ml Aether, 100 ml Wasser und 14,0 g Hydroxylammoniumchlorid lässt man bei 0° C gleichzeitig 40 ml 30 %iger Natronlauge und 41 g 2,6-Dichlorbenzoylchlorid zutropfen. Die Mischung wird für 30 Minuten bei einer Temperatur von 20 - 25° C kräftig gerührt. Der entstandene Niederschlag wird abgetrennt und aus Methanol umkristallisiert. Man erhält 33 g (80 % d.Th.) N-Hydroxy-2,6-dichlorbenzamid, Smp. 176° C (Zers.)

Beispiel H6: 2,6-Dichlorbenzoylaminooxyessigsäure (Verb. Nr. 1.1).

271 g 2,6-Dichlorbenzoylaminooxyessigsäuremethylester werden in 590 ml 2N Kaliumhydroxidlösung suspendiert und für 4 Stunden bei einer Temperatur von 50 - 60° C gerührt. Es entsteht eine klare Lösung. Durch Ansäuren mit Salzsäure wird das Produkt ausgefällt. Der Niederschlag wird abfiltriert und aus Wasser umkristallisiert. Man erhält so 190 g (75 % d.Th.) 2,6-Dichlorbenzoylaminooxyessigsäure, Smp. 173 - 174° C.

Beispiel H7: N-Methyl-2,6-dichlorbenzoylaminooxyessigsäure (Verb. Nr. 1.9).

Eine Lösung von 3,2 g N-Methyl-2,6-dichlorbenzoylaminooxyessigsäure-tert.butylester in 40 ml Wasser wird mit 5 ml Trifluoressigsäure versetzt und für 2 Stunden zum Rückfluss erhitzt. Durch Eindampfen der Reaktionslösung und Abkühlen des Rückstands erhält man 2,3 g N-Methyl-2,6-dichlorbenzoylaminooxyessigsäure, die aus Aethylacetat umkristallisiert wird, Ausbeute: 2,0 g (80 % d.Th.), Smp. 160-161° C.

Beispiel H8: 2,6-Dichlorbenzoylaminooxyessigsäurechlorid (Verb. Nr. 1.11).

5,2 g 2,6-Dichlorbenzoylaminooxyessigsäure werden in 10 ml Oxalylchlorid und 40 ml Toluol gelöst. Die Lösung wird zum Rückfluss erhitzt, bis die Gasentwicklung beendet ist. Durch Eindampfen des Reaktionsgemisches erhält man in quantitativer Ausbeute 6,0 g 2,6-Dichlorbenzoylaminooxyessigsäurechlorid als gelbes Oel, $n_D^{25}$: 1,5518.

Beispiel H9: 2,6-Dichlorbenzoylaminooxyessigsäureamid (Verb. Nr. 1.10).

In eine Lösung von 2,8 g 2,6-Dichlorbenzoylaminooxyessigsäurechlorid in 100 ml Aether wird bis zur Sättigung gasförmiges Ammoniak eingeleitet. Anschliessend wird die Mischung mit Wasser gewaschen, getrocknet und eingedampft. Der Rückstand wird aus Aethylacetat umkristallisiert. Man erhält so 0,7 g (25 % d.Th.) 2,6-Dichlorbenzoylaminooxyessigsäureamid, Smp. 168 - 171° C.

Beispiel H10: 2,6-Dichlorbenzoylaminooxyessigsäure-2,6-dichlorphenylester (Verb. Nr. 1.5).

Eine Lösung von 2,6 g 2,6-Dichlorbenzoylaminooxyessigsäure und 1,6 g 2,6-Dichlorphenol in 50 ml Acetonitril wird portionsweise mit 2,0 g Dicyclohexylcarbodiimid versetzt. Die Suspension wird für 45 Minuten bei 20 - 25° C gerührt, filtriert und eingedampft. Der Rückstand wird aus Aethylacetat umkristallisiert. Man erhält so 1,9 g (55 % d.Th.) 2,6-Dichlorbenzoylaminooxyessigsäure-2,6-dichlorphenylester, Smp. 186 - 188° C.

Beispiel H11: N-Hydroxy-N-methyl-2,6-dichlorbenzamid.

Zu einer vorgelegten Mischung aus 150 ml Acetonitril, 4,2 g N-Methylhydroxylammoniumchlorid und 10,5 g 2,6-Dichlorbenzoylchlorid lässt man bei 50°C 10,1 g Triäthylamin zutropfen. Die Mischung wird 12 Stunden bei 20 - 25°C kräftig gerührt. Nach Abtrennen des entstandenen Niederschlags wird die Lösung eingedampft. Durch Umkristallisieren des Rückstandes aus Aethylacetat erhält man 9,7 g (88 % d.Th.) N-Hydroxy-N-methyl-2,6-dichlorbenzamid, Smp. 135-136°C.

Beispiel H12: N-Methyl-2,6-dichlorbenzoylaminooxyessigsäure-tert. butylester (Verb. 1.7).

Eine Suspension von 1,3 g Natriumhydrid in 200 ml Tetrahydrofuran wird portionenweise mit 6,6 g N-Hydroxy-N-methyl-2,6-dichlorbenzamid versetzt. Nach Beendigung der Gasentwicklung läss man zu diesem Gemisch bei einer Temperatur von 25 - 30° C 6,4 g Bromessigsäure-tert. butylester zutropfen. Anschliessend wird die Reaktionsmischung für eine Stunde zum Rückfluss erhitzt. Nach Abtrennen des entstandenen Niederschlags wird die Lösung mit Wasser gewaschen und eingedampft. Durch Chromatographieren des Rückstands an einer Kieselgel-Säule mit Aether erhält man 5,6 g (59 % d.Th.) N-Methyl-2,6-dichlorbenzoylamino-oxyessigsäure-tert.butylester, $n_D^{27}$ : 1,5070.

Auf die in den Beispielen angegebene oder auf analoge Weise werden die in der anschliessenden Tabelle aufgeführten Verbindungen hergestellt.

Tabelle 1:

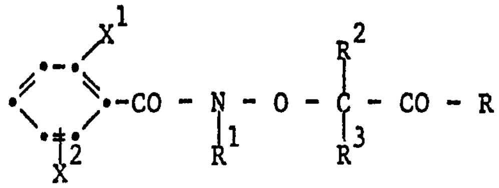

| Verb. Nr. | $X^1$ | $X^2$ | $R^1$ | $R^2$ | $R^3$ | R | phys.Daten |
|---|---|---|---|---|---|---|---|
| 1.1 | Cl | 6-Cl | H | H | H | OH | Smp.174-175°C |
| 1.2 | Cl | 6-Cl | H | H | H | $OCH_3$ | Smp.117-119°C |
| 1.3 | Cl | 4-Cl | H | H | H | OH | Smp.159-163°C |
| 1.4 | Cl | 4-Cl | H | H | H | $OCH_3$ | Smp.158-161°C |
| 1.5 | Cl | 6-Cl | H | H | H | $2\text{-Cl-6-Cl-}C_6H_3\text{-O-}$ | Smp.186-188°C |
| 1.6 | Cl | 6-Cl | $CH_3$ | H | H | $OCH_3$ | Smp.67-70°C |
| 1.7 | Cl | 6-Cl | $CH_3$ | H | H | $OC_4H_9$-t | $n_D^{27}$ 1,5070 |
| 1.8 | Cl | 6-Cl | H | $CH_3$ | H | OH | Smp.150-153°C |
| 1.9 | Cl | 6-Cl | $CH_3$ | H | H | OH | Smp.160-161°C |
| 1.10 | Cl | 6-Cl | H | H | H | $NH_2$ | Smp.168-171°C |
| 1.11 | Cl | 6-Cl | H | H | H | Cl | $n_D^{25}$: 1,5518 |
| 1.12 | F | 6-F | H | H | H | OH | Smp.111-114°C |
| 1.13 | F | 6-F | H | H | H | $OCH_3$ | Smp.103-105°C |
| 1.14 | Cl | 6-F | H | H | H | OH | Smp.129-131°C |
| 1.15 | Cl | 6-F | H | H | H | $OCH_3$ | Smp. 92-94°C |
| 1.16 | Cl | 6-Cl | H | H | H | $SCH_3$ | Smp. 104-106°C |
| 1.17 | Cl | 6-Cl | H | H | H | $NHCH_3$ | Smp. 172-175°C |
| 1.18 | Cl | 6-Cl | H | H | H | $N(CH_3)_2$ | Smp. 131-134°C |
| 1.19 | Cl | 6-Cl | H | $CH_3$ | $CH_3$ | OH | |
| 1.20 | Cl | 6-Cl | H | $CH_3$ | $CH_3$ | $OC_2H_5$ | $n_D^{26}$: 1,5210 |
| 1.21 | Cl | $6\text{-}NO_2$ | H | H | H | $OCH_3$ | Smp. 163-165°C |
| 1.22 | Cl | $6\text{-}NO_2$ | H | H | H | OH | Smp. 180-182°C |
| 1.23 | Cl | $6\text{-}NH_2$ | H | H | H | $OCH_3$ | |
| 1.24 | Cl | $6\text{-}NH_2$ | H | H | H | OH | |
| 1.25 | Cl | $6\text{-}N_3$ | H | H | H | $OCH_3$ | Smp. 78-81 °C |
| 1.26 | Cl | $6\text{-}N_3$ | H | H | H | OH | Smp. 143-145°C |

Tabelle 1: (Fortsetzung)

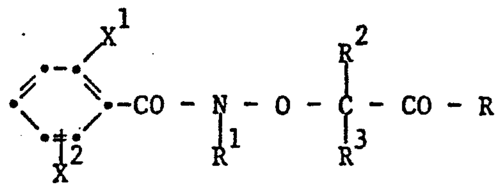

| Verb. Nr. | $X^1$ | $X^2$ | $R^1$ | $R^2$ | $R^3$ | R | phys.Daten |
|---|---|---|---|---|---|---|---|
| 1.27 | Cl | 6-Cl | H | $C_2H_5$ | H | OH | Smp. 147-150°C |
| 1.28 | Cl | 6-Br | H | H | H | $OCH_3$ | |
| 1.29 | Cl | 6-Br | H | H | H | OH | Smp. 166-168°C |
| 1.30 | Cl | 6-NH-$COCH_2$Cl | H | H | H | $OCH_3$ | |
| 1.31 | Cl | 6-NH-$COCH_2$Cl | H | H | H | OH | |

Formulierungsbeispiele für flüssige Wirkstoffe der Formel I (%=Gewichtsprozent)

| Beispiel F 1: Emulsions-Konzentrate | a) | b) | c) |
|---|---|---|---|
| Wirkstoff aus Tabelle 1 | 25% | 40% | 50% |
| Ca-Dodecylbenzolsulfonat | 5% | 8% | 6% |
| Ricinusöl-polyäthylenglykoläther (36 Mol AeO) | 5% | - | - |
| Tributylphenoyl-polyäthylenglykoläther (30 Mol AeO) | - | 12% | 4% |
| Cyclohexanon | - | 15% | 20% |
| Xylolgemisch | 65% | 25% | 20% |

Aus solchen Konzentraten können durch Verdünnen mit Wasser Emulsionen jeder gewünschten Konzentration hergestellt werden.

| Beispiel F 2: Lösungen | a) | b) | c) | d) |
|---|---|---|---|---|
| Wirkstoff aus Tabelle 1 | 80% | 10% | 5% | 95% |
| Aethylenglykol-monomethyl-äther | 20% | - | - | - |
| Polyäthylenglykol M G 400 | - | 70% | - | - |
| N-Methyl-2-pyrrolidon | - | 20% | - | - |
| Epoxydiertes Kokosnussöl | - | - | 1% | 5% |
| Benzin (Siedegrenzen 160-190°C) | - | - | 94% | - |

Die Lösungen sind zur Anwendung in Form kleinster Tropfen geeignet.

| Beispiel F 3: Granulate | a) | b) |
|---|---|---|
| Wirkstoffe aus Tabelle 1 | 5% | 10% |
| Kaolin | 94% | - |
| Hochdisperse Kieselsäure | 1% | - |
| Attapulgit | - | 90% |

Der Wirkstoff wird in Methylenchlorid gelöst, auf den Träger aufgesprüht und das Lösungsmittel anschliessend im Vakuum abgedampft.

| Beispiel F 4: Stäubemittel | a) | b) |
|---|---|---|
| Wirkstoff aus Tabelle 1 | 2% | 5% |
| Hochdisperse Kieselsäure | 1% | 5% |
| Talkum | 97% | - |
| Kaolin | - | 90% |

Durch inniges Vermischen der Tägerstoffe mit dem Wirkstoff erhält man gebrauchsfertige Stäubemittel.

Formulierungsbeispiele für feste Wirkstoffe der Formel I (%=Gewichtsprozent)

| Beispiel F 5: Spritzpulver | a) | b) | c) |
|---|---|---|---|
| Wirkstoff aus Tabelle 1 | 25% | 50% | 75% |
| Na-Ligninsulfonat | 5% | 5% | - |
| Na-Laurylsulfat | 3% | - | 5% |
| Na-Diisobutylnaphthalinsulfonat | - | 6% | 10% |
| Octylphenolpolyäthylenglykoläther (7-8 Mol AeO) | - | 2% | - |
| Hochdisperse Kieselsäure | 5% | 10% | 10% |
| Kaolin | 62% | 27% | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

Beispiel F 6: Emulsions-Konzentrat

| | |
|---|---|
| Wirkstoff aus Tabelle 1 | 10% |
| Octylphenolpolyäthylenglykoläther (4-5 Mol AeO) | 3% |
| Ca-Dodecylbenzolsulfonat | 3% |
| Ricinusölpolyglykoläther (35 Mol AeO) | 4% |
| Cyclohexanon | 20% |
| Xylolgemisch | 50% |
| Kokosnussöl | 10% |

Aus diesem Konzentrat können durch Verdünnen mit Wasser Emulsionen jeder gewünschten Konzentration hergestellt werden.

| Beispiel F 7: Stäubemittel | a) | b) | c) |
|---|---|---|---|
| Wirkstoff aus Tabelle 1 | 5% | 8% | 6% |
| Talkum | 95% | - | 44% |
| Kaolin | - | 92% | 50% |

Man erhält anwendungsfertige Stäubemittel, indem der Wirkstoff mit den Träger vermischt und auf einer geeigneten Mühle vermahlen wird.

Beispiel F 8: Extruder Granulat

| | |
|---|---|
| Wirkstoff aus Tabelle 1 | 10%. |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

| Beispiel F 9: Umhüllungs-Granulat | a) | b) |
|---|---|---|
| Wirkstoff aus Tabelle 1 | 3% | 5% |
| Polyäthylenglykol (MG 200) | 3% | 3% |
| Kaolin | 94% | 92% |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

Beispiel F 10: Suspensions-Konzentrat

| | |
|---|---|
| Wirkstoff aus Tabelle 1 | 40% |
| Aethylenglykol | 10% |
| Nonylphenolpolyäthylenglykoläther (15 Mol AeO) | 6% |
| N-Lingninsulfonat | 10% |
| Carboxymethylcellulose | 1% |
| 37%ige wässrige Formaldehyd-Lösung | 0,2% |
| Silikonöl in Form einer 75%igen wässrigen Emulsion | 0,8% |
| Wasser | 32% |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können. Formulierungszusätze, die die Haftung des Wirkstoffs auf der Pflanze erhöhen, wie z.B. mineralische oder pflanzliche Oele, wirken sich bei der Blattapplikation sehr vorteilhaft aus.

Biologische Beispiele:

Beispiel B 1: Gametozide Aktivität bei kleinkörnigen Halmfrüchten

a) Induktion der männlichen Sterilität

Weizenpflanzen werden zu Beginn der Blütenbildung, d.h. etwa im 5 1/2-Blattstadium mit einer aus Spritzpulver des Wirkstoffs hergestellten Spritzbrühe (3000 ppm Aktivsubstanz) gleichmässig besprüht. 2 bis 4 Wochen nach der Applikation, jedoch noch vor dem Antherenschieben, wird jede Aehre durch Abdecken gegen Fremdbestäubung geschützt. Die Bewertung der gametoziden Wirkung erfolgt zum Erntezeitpunkt durch Auszählen der gebildeten Körner pro Aehre. Als Vergleich dienen unbehandelte Weizenpflanzen.

b) Fruchtbarkeitstest (Bildung von Hybridsaatgut)

Eine Kontrollgruppe von Weizenpflanzen wird wie unter a) behandelt, abgedeckt oder isoliert gehalten und mit Blütenpollen einer anderen Weizensorte fremdbestäubt. Die Bewertung der Befruchtungsfähigkeit erfolgt zum Erntezeitpunkt durch Auszählen der gebildeten Hybrid-Körner pro Aehre. Als Vergleich dienen unbehandelte Weizenpflanzen und behandelte, aber abgedeckte Pflanzen.

Benzoylaminooxyessigsäurederivate aus der Tabelle 1 zeigen in obigen Versuchen a und b eine sehr gute gametozide Aktivität bei Weizen.
Die Verbindungen Nr. 1,1, 1.2, 1.3, 1.4, 1.5, 1.6, 1.7, 1.8, 1.9 und 1.10 reduzieren die Bildung von Körnern pro Aehre auf 0 bis 15 %. Selbst bei einer Wirkstoffkonzentration von 750 ppm unterdrücken unter anderem die Verbindungen Nr. 1.1, 1.2, 1.3 und 1.4 die Bildung von Körnern noch vollständig (unbehandelte Kontrolle = 100 % Körner). Die Verbindung 1.2 hat diese vollständige gametozide Wirkung auch noch bei einer Konzentration von 100 ppm. Die mit den genannten Verbindungen behandelte zweite Kontrollgruppe (Test b) entwickelt sich nach der Fremdbestäubung wie die unbehandelten Pflanzen. Die Zahl der geernteten Hybrid-Körner beträgt 85 bis 100 %. Bei den mit einer der Verbindungen Nr. 1.1, 1.2, 1.3 und 1.4 behandelten Weizenpflanzen liegt die Zahl der Hybrid-Körner sogar noch höher als bei der unbehandelten Vergleichsgruppe.

Vergleichbare Ergebnisse sind bei analogen Versuchen in Gerste und Roggen zu beobachten.

Beispiel B 2: Gametozide Aktivität bei Mais

a) Induktion der männlichen Sterilität

Maispflanzen werden bei der Blütenbildung, jedoch noch vor Sichtbarwerden des männlichen Blütenstandes mit einer Suspension des Wirkstoffs (3000 ppm Aktivsubstanz) gleichmässig besprüht. Kolben und

Fahne der behandelten Pflanzen werden sorgfältig abgedeckt. Nach Ausbildung der männlichen Blütenteile, d.h. ca. 3 Wochen nach Applikation wird die gametozide Wirkung anhand der Fahnen- und Antherenausbildung beurteilt und die Pollensterilität anhand einer Selbstung überprüft. Dazu werden, sofern ausgebildet, Blütenpollen derselben Pflanze auf die Narben der Kolben übertragen (=Selbstung) und zum Zeitpunkt der Ernte die Maiskörner pro Kolben ausgezählt. Als Vergleich dient unbehandelter Mais.

b) Fruchtbarkeitstest (Bildung von Hybridsaatgut)
Eine Kontrollgruppe von Maispflanzen wird wie unter a) behandelt und deren männliche und weibliche Blütenteile werden sorgfältig abgedeckt. Ca. 3 Wochen nach der Applikation werden die Kolben der behandelten Pflanzen mit Blütenpollen einer anderen, ausgewählten Maissorte fremdbestäubt. Zum Erntezeitpunkt wird die Fruchtbarkeit durch Auszählen der Hybrid-Körner pro Kolben beurteilt. Als Vergleich dient unbehandelter Mais.

In den obigen Versuchen a und b induzieren Verbindungen aus der Tabelle 1 eine nahezu vollständige männliche Sterilität. So führt z.B. die Behandlung mit den Verbindungen der Tabelle 1 zu einer Reduktion der Maiskörner pro Kolben auf weniger als 20 %. Bei keiner der Verbindungen wird die Fremdbestäubung merklich beeinträchtigt. Die Ausbeute an Hybrid-Körnern beträgt 85 bis 100 %.

Beispiel B 3: Ertragssteigerung an Sojabohnen
In Kunststoffbehältern mit einem Erde-Torf-Sandgemisch im Verhältnis 6:3:1 werden Sojabohnen der Sorte "Hark" angesät und in eine Klimakammer gegeben. Durch optimale Temperaturwahl, Beleuchtung, Düngerzugabe und Bewässerung entwickeln sich die Pflanzen nach ca.
5 Wochen bis zum 5-6 Trifolia-Blattstadium. Zu diesem Zeitpunkt werden die Pflanzen mit der wässrigen Brühe eines Wirkstoffes der Formel I bis zur guten Benetzung besprüht. Die Wirkstoffkonzentrationen betragen 10, 50, 100 und 500 ppm. Die Auswertung erfolgt ca. 5 Wochen

nach der Applikation des Wirkstoffs. Im Vergleich zu unbehandelten Kontrollpflanzen bewirken die erfindungsgemässen Wirkstoffe der Formel I eine merkliche Erhöhung der Anzahl und des Gewichts der geernteten Schoten, bzw. des Schotengewichts im Verhältnis zum Pflanzengewicht (Frischgewicht Schoten/Frischgewicht Pflanzen nach Abnahme der Schoten = Ernteindex)

Ergebnisse:

Geprüfter Wirkstoff Nr. 1.1.

| Wirkstoff-konzentration in ppm | Schotenanzahl in % zur Kontrolle | Schotengewicht in % zur Kontrolle | Ernteindex in % zur Kontrolle |
|---|---|---|---|
| 10 | 102 | 100 | 108 |
| 50 | 107 | 133 | 158 |
| 100 | 114 | 129 | 142 |
| 500 | 82 | 90 | 139 |

Patentansprüche

1. Pflanzenwuchsregulierendes Mittel, dadurch gekennzeichnet, dass es neben Träger- und/oder anderen Zuschlagstoffen als Wirkstoff ein Benzoylamino-oxyessigsäurederivat der Formel I

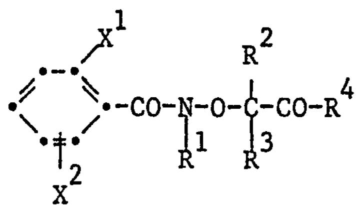
(I)

oder ein Salz davon enthält, worin
$X^1$ für Halogen,
$X^2$ für Halogen, Nitro, Amino, Azido oder $-NH-CO-R^5$,
$R^1$, $R^2$ und $R^3$ unabhängig voneinander für Wasserstoff oder $C_1$-$C_4$-Alkyl und
$R^4$ für Amino, $-NH-C_1$-$C_4$-Alkyl, $-N$-di-$C_1$-$C_4$-Alkyl oder $-Y-R^6$ stehen,
wobei
$R^5$ $C_1$-$C_4$-Alkyl oder $C_1$-$C_4$-Halogenalkyl,
$R^6$ Wasserstoff, ein Metallkation, ein Hydraziniumkation, ein Ammoniumkation oder einen gegebenenfalls durch Halogen, Phenyl oder $C_1$-$C_4$-Alkoxy substituierten Rest aus der Gruppe Phenyl, $C_1$-$C_4$-Alkyl, $C_3$-$C_5$-Alkenyl oder $C_3$-$C_5$-Alkinyl und
Y Sauerstoff oder Schwefel stehen.

2. Mittel gemäss Anspruch 1, dadurch gekennzeichnet, dass es 0,1 bis 95 % eines Wirkstoffs der Formel I, 1 bis 99,9 % eines festen oder flüssigen Zusatzstoffes enthält.

3. Mittel gemäss Anspruch 1, dadurch gekennzeichnet, dass es als Wirkstoff eine Verbindung der Formel Ia

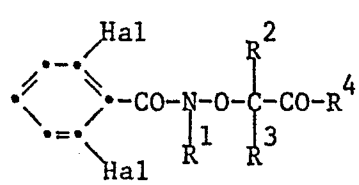
(Ia)

oder ein Salz davon enthält, worin die Substituenten Hal unabhängig vonainander für Halogen stehen und $R^1$, $R^2$, $R^3$ und $R^4$ die unter Formel I im Anspruch 1 gegebene Bedeutung haben.

4. Mittel gemäss Anspruch 3, dadurch gekennzeichnet, dass die beiden Substituenten Hal für Chlor stehen.

5. Mittel gemäss Anspruch 4, dadurch gekennzeichnet, dass $R^1$, $R^2$ und $R^3$ Wasserstoff bedeuten und $R^4$ für Hydroxyl oder $C_1$-$C_4$-Alkoxy steht.

6. Mittel gemäss Anspruch 5, dadurch gekennzeichnet, dass $R^4$ Hydroxyl oder Methoxy bedeutet.

7. Mittel gemäss Anspruch 1, dadurch gekennzeichnet, dass es als Wirkstoff 2,6-Dichlorbenzoylaminooxyessigsäure oder 2,6-Dichlorbenzoylaminooxyessigsäuremethylester enthält.

8. 2,6-Dihalogenbenzoylaminooxyessigsäurederivate der Formel Ia

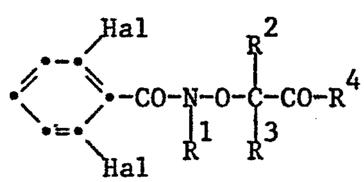

(Ia)

sowie deren Salze, worin die Substituenten Hal unabhängig voneinander für Halogen stehen und $R^1$, $R^2$, $R^3$ und $R^4$ die unter Formel I im Anspruch 1 gegebene Bedeutung haben.

9. Verbindungen gemäss Anspurch 8, dadurch gekennzeichnet, dass die beiden Substituenten Hal für Chlor stehen.

10. Verbindungen gemäss Anspruch 9, dadurch gekennzeichnet, dass $R^1$, $R^2$ und $R^3$ Wasserstoff bedeuten und $R^4$ für Hydroxyl oder $C_1$-$C_4$-Alkoxy steht.

11. Verbindungen gemäss Anspruch 10, dadurch gekennzeichnet, dass $R^4$ Hydroxyl oder Methoxy bedeutet.

12. 2,6-Dichlorbenzoylaminooxyessigsäure gemäss Anspruch 8.

13. 2,6-Dichlorbenzoylaminooxyessigsäuremethylester gemäss Anspruch 8.

14. Verwendung der Benzoylaminooxyessigsäurederivate der Formel I, nach Anspruch 1 zur Beeinflussung des Pflanzenwachstums.

15. Verwendung gemäss Anspruch 14 zur Ertragssteigerung von Kulturpflanzen.

16. Verwendung gemäss Anspruch 15 zur Ertragssteigerung von Sojapflanzen.

17. Verwendung gemäss Anspruch 14 zur Erzeugung männlich steriler, jedoch fortpflanzungsfähiger Pflanzen.

18. Verwendung gemäss Anspruch 17, dadurch gekennzeichnet, dass es sich bei den Pflanzen um Kulturpflanzen handelt.

19. Verfahren zur Beeinflussung des Pflanzenwachstums, dadurch gekennzeichnet, dass man die Pflanzen, Pflanzenteile, deren Samen oder deren Standort mit einer wirksamen Menge einer Verbindung der Formel I nach Anspruch 1 behandelt.

20. Verfahren nach Anspruch 19, dadurch gekennzeichnet, dass man die Aktivsubstanzen der Formel I in einer Aufwandmenge von 0,05 bis 12 kg Aktivsubstanz pro ha appliziert.

21. Verfahren nach Anspruch 20, gekennzeichnet, durch eine Aufwandmenge von 0,5 bis 8 kg Aktivsubstanz pro ha.

22. Verfahren nach Anspruch 21, gekennzeichnet, durch eine Aufwandmenge von 0,5 bis 4 kg Aktivsubstanz pro ha.

23. Verfahren gemäss Anspruch 19, dadurch gekennzeichnet, dass es sich bei der Pflanzenwachstumsbeeinflussung um die Steigerung des Ertrags von Kulturpflanzen handelt.

24. Verfahren gemäss Anspruch 23, dadurch gekennzeichnet, dass es sich bei den behandelten Pflanzen um Sojapflanzen handelt.

25. Verfahren nach Anspruch 19, dadurch gekennzeichnet, dass es sich um die Erzeugung männlich steriler, jedoch fortpflanzungsfähiger Pflanzen handelt.

26. Verfahren nach Anspruch 25, dadurch gekennzeichnet, dass man Kulturpflanzen behandelt.

27. Verfahren nach Anspruch 26, dadurch gekennzeichnet, dass man kleinkörnige Halmfrucht-, Getreidepflanzen oder Futtergräser behandelt.

28. Verfahren nach Anspruch 26, dadurch gekennzeichnet, dass man Weizen, Roggen, Gerste, Hafer, Reis, Mais, Sorghum-Hirse, Lein, Avocados, Leguminosen, Sonnenblumen, Baumwolle, Gemüse oder Zierpflanzen behandelt.

29. Verfahren nach Anspruch 27, dadurch gekennzeichnet, dass man die Behandlung nach dem Auflaufen, aber noch bevor sich die Aehren und Antheren zeigen, durchführt.

30. Verfahren nach Anspruch 27, dadurch gekennzeichnet, dass man die Behandlung im 5 1/2 Blattstadium der Pflanzen durchführt.

31. Verfahren nach Anspruch 19 zur Erhöhung der Anzahl der Blütenstände, dadurch gekennzeichnet, dass man die Applikation an Kulturpflanzen vor Blühbeginn durchführt.

32. Verfahren nach Anspruch 31, dadurch gekennzeichnet, dass man den Wirkstoff auf Sonnenblumen, Bauwolle, Kürbis, Gurken, Melonen, Hülsenfrüchte oder Zierpflanzen appliziert.

33. Verfahren zur Gewinnung von Hybrid-Samen, dadurch gekennzeichnet, dass man eine als weibliche Elternpflanze ausgewählte Stammpflanze zu Beginn der Blütenbildung, aber vor Ausbildung der männlichen Blütenteile durch Applikation einer Verbindung der Formel I gemäss Anspruch 1, männlich sterilisiert und mit Pollen einer ausgewählten genetisch-ähnlichen Pflanze fremdbestäubt und den reifen Hybrid-Samen erntet.

34. Verfahren nach Anspruch 33, dadurch gekennzeichnet, dass man den Wirkstoff in einer Aufwandmenge von 0,05 bis 12 kg Aktivsubstanz pro ha auf die weibliche Elternpflanze oder deren Standort appliziert.

35. Hybridsaatgut, erhalten durch das Verfahren gemäss Anspruch 33.

36. Verfahren zur Herstellung eines pflanzenwuchsregulierenden Mittels, dadurch gekennzeichnet, dass man mindestens einen der im Anspruch 1 definierten Wirkstoffe der Formel I zusammen mit den in der Formulierungstechnik üblichen Trägerstoffen, Streckmitteln und Tensiden innig vermischt.

37. Verfahren zur Herstellung der 2,6-Dihalogenbenzoylaminooxyessigsäurederivate der Formel Ia, dadurch gekennzeichnet, dass man eine Benzoylhydroxamsäure der Formel II

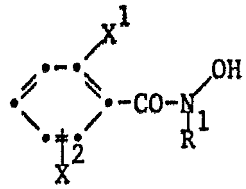 (II)

worin $X^1$, $X^2$ und $R^1$ die unter Formel I gegebene Bedeutung haben, in Gegenwart eines säurebindenden Mittels mit einem α-Halogenessigsäurederivat der Formel III

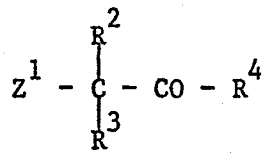 (III)

worin $R^2$, $R^3$ und $R^4$ die unter Formel I gegebene Bedeutung haben und $Z^1$ für Halogen, insbesondere für Chlor oder Brom steht, unter Halogenwasserstoffabspaltung umsetzt.

38. Verfahren zur Herstellung von Benzoylaminooxyessigsäurederivaten der Formel I, in denen $R^4$ für $-OR^6$ steht, dadurch gekennzeichnet, dass man ein Aminooxyessigsäurederivat der Formel IV oder V

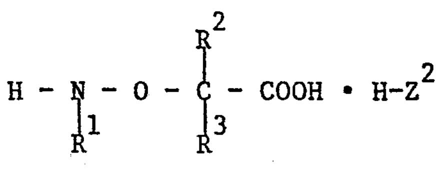 (IV)

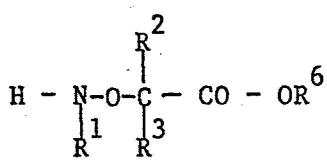 (V)

worin $R^1$, $R^2$, $R^3$ und $R^6$ die unter Formel I gegebene Bedeutung haben und $Z^2$ für Chlor oder Brom steht, in Gegenwart eines säurebindenden Mittels mit einem Benzoylhalogenid der Formel VI

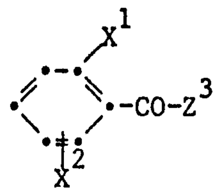

(VI)

umsetzt, worin $X^1$ und $X^2$ die unter Formel I gegebene Bedeutung haben und $Z^3$ für Chlor oder Brom steht.

39. Verfahren zur Herstellung der Verbindungen der Formel I, in denen $R^4$ für eine Ester oder Thioestergruppe steht, dadurch gekennzeichnet, dass man ein Aminooxyessigsäurederivat der Formel VII

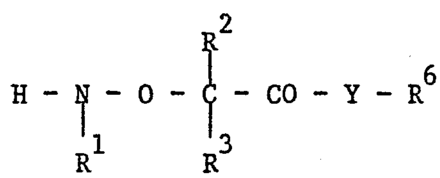

(VII)

worin $R^1$, $R^2$, $R^3$, $R^6$ und Y die unter Formel I gegebene Bedeutung haben, in Gegenwart eines Kondensationsmittels, wie beispielsweise Dicyclohexylcarbodiimid, mit einer Benzoesäure der Formel VIII

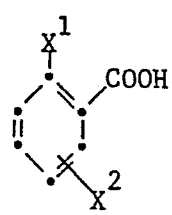

(VIII)

worin $X^1$ und $X^2$ die unter Formel I gegebene Bedeutung haben, umsetzt.

FO 7.3 CW/bg*/eh*